# EUROPEAN PATENT SPECIFICATION

(11) **EP 1 889 716 B1**
(45) Date of publication and mention of the grant of the patent: **19.12.2012**
(21) Application number: 06016955.4
(22) Date of filing: 14.08.2006
(51) Int. Cl.: B32B 27/18, C08K 5/17, C08L 23/02, C08J 5/18, C08J 7/04

(54) **Polyolefin films preventing water droplet cloudiness**
Polyolefinfilme, welche Wassertropfenbeschlagsbildung verhindern
Feuilles en polyoléfine ayant une résistance à l'embuage

(43) Date of publication of application: 20.02.2008
(73) Proprietor: CONSTAB Polyolefin Additives GmbH, 59602 Rüthen (DE)
(72) Inventor: Henke Günter, 59929 Brilon (DE); Schmidt, Horst F., 69488 Birkenau (DE)
(74) Representative: Thiel, Christian

(56) References cited:
- EP-A- 1 457 315
- EP-A1- 0 612 613
- WO-A-02/074535

## Description

The present invention relates to polyolefin films suitable for preventing water droplet cloudiness. More particularly, the invention relates to film structures containing one or more agents which suppress the formation of drops whilst water vapour is condensating on the film surface.

Films of this type are known and are widely used for packaging purposes, for example for packaging of moist food, such as meat, cheese, salad, fresh fruits and vegetables. Normally sealed wrap bags and food trays, wrapped or covered with a lid, are used in the packaging market.

Polyolefins are very hydrophobic materials and their manufactured films are relatively resistant to water vapour penetration with a low surface energy. Consequently, when these films come into contact with a moist surrounding which is saturated with water vapour the condensate does not wet out or spread over the surface. If the temperature is dropping below its dew point small, discrete droplets are formed. This especially occurs at sharp and distinctive temperature changes, e.g. if food packages are exposed to refrigeration.

The consequences are a loss of transparency, dripping down of water and a substantial focussing lens effect for incident sunlight. Thus the quality of packed food is aesthetically reduced and no longer attractive to potential customers. In addition the food can be spoiled. Particularly water drops which drip down from the inside of the packaging can e.g. cause mildew and rotting deterioration of vegetables.

In order to prevent water from condensing in droplets, additives are often applied to reduce the contact angle and to form a uniform thin and transparent water film.

On one hand the desirable effect can be achieved by well known coating processes on the film surface such as spraying, gravure, rod and roll applications, or the like. Solvents, diluents and adjuvants may be used in these processes as desired. The applied agents are immediately active after processing.

On the other hand and alternatively the additives may be incorporated into the film itself by compounding, blending, injection or other suitable means. The most preferred method is the manufacture of additive concentrates, e.g. using a twin-screw extruder. Subsequently these masterbatches are blended with the polymer(s) before or during the extrusion steps of the film production.

After the film manufacture the applied additives migrate to the surface and provide the desired effect after a period of storage.

Due to lower production cost the incorporation of masterbatches is widely applied. The coating process is of limited use due to the film requirements. The external agents applied by the coating processing are quickly removed from the surface by wash-off or abrasion. They only give a short-term effect whereas incorporated agents can provide a more consistent and long-lasting performance by its continuous migration.

Suitable additives, incorporated in polyolefin matrices, for the prevention of water droplet cloudiness, are non-ionic surfactants with a more or less nonpolar hydrophobic hydrocarbon chain and polar hydrophilic functional groups. Regarding a selective class of such chemical compounds the hydrophobic part of the molecule regulates the compatibility with the polymer and the migration behaviour. This hydrophobic part is also the main factor for influencing the depot properties which determine the long-lasting effect. The functional groups provide a certain incompatibility with the polyolefin substrate and have an effect on the migration. They are self-orientating outside the film surface and interact with the water by partial dissolution into the droplets.

For the manufacture, processing and practical usage of the said films the applied additives have to meet many requirements such as an adequate heat stability, low volatility in order to prevent vapour formation during film production, no yellowing effect and no negative influence on the transparency and the odour of the finished films. For packaging films the printing, heat-sealing and laminating properties should not be affected, also not at longer storage times.

In addition regulations for food approvals must be taken into consideration and for the commercial use the required dosage level and the raw material price of the applied agents are important.

A great number of agents for preventing water droplet cloudiness have been suggested as additives for polyolefin films. Preferred chemical classes are glycerol and polyglycerol esters, sorbitan esters and their ethoxylates, ethoxylated alcohols and phenol ethoxylates.

For instance, US 3,048,263 A discloses the use of various glyceryl esters of fatty acids for polyolefin films. EP 0 254 236 A relates to alkoxylated alkylphenols for linear ethylene polymers, and WO 84/03296 A claims blends of alkoxylated alkyl phenols, glyceryl esters and polyalkoxylated fatty acid esters for polyethylene films.

WO 98/44030 A discloses a blend of several compounds of esters of polyhydric alcohols, mono- and dialkoxylated amines and alkoxylated alkylphenols or derivatives thereof whereas in WO 97/13640 A combinations of various glycerol mono- and diesters with polyoxyethylene ethers of fatty alcohols for polyolefin films are disclosed.

Also, special multilayer film structures comprising additives are the subject-matter of disclosures.

In WO 97/13640 A compounds of several chemical groups are disclosed for the usage in one of the outer layers of films manufactured from polyethylene homo- and copolymers made from esters of aliphatic alcohols, polyethers, polyethoxylated aromatic alcohols, polyhydric aliphatic alcohols and esters thereof.

In WO 2002/074 535 A addition of blends only to the intermediate layer of a multilayer film is described. The blend consists of at least two compounds selected from the substance classes of fatty acid esters, aliphatic alcohols, ethoxylated aromatic alcohols, mono- or polyesterified sorbitan ester, mono- or polyesterified glycerol esters, ethoxylated sorbitan esters and ethoxylated amines. It is reported that the manufactured films show a continuous prevention of water droplet cloudiness after various storage periods. It is also stated that the printability and the hot-tack properties of these films are improved.

WO 2004/080 715 A describes a biaxially oriented multilayer polyolefin film comprising at least one base layer, one intermediate layer and two cover layers. To achieve good short- and long-term effectiveness, the additives are only added to the base and to the first cover layer.

The polyolefin films known from the prior art show disadvantages with respect to the degree of prevention of water droplet cloudiness immediately after film manufacture and/or after a longer storage of several months. Also blooming on the film surface is observed, followed by an impairment of the printability and heat sealability, especially when the efficiency of the applied additives and/or the film structure require a high dosage level. In addition some blends deliver only an unstable time dependent effect caused by the continuous competition of the individual components in the migration to the film surface in order to form and rebuild molecular layers.

There is a perceived need in the market for polyolefin films for packaging purposes with an improved performance.

For the purpose of overcoming the said disadvantages the object of the present invention is to provide polyolefin films with an excellent prevention of water droplet cloudiness which are stable during the storage time of the films. At the same time the film should have very good optical, printing and heat-sealing properties. In order to avoid undesirable migration effects in multilayer films the applied agents should be also suitable for dosages in all individual layers without impairing requested film properties.

Accordingly, the invention provides a polyolefin film for preventing water droplet cloudiness comprising a core layer and two cover layers, the layers comprising a polyolefin as a main component, characterized in that at least one layer comprises an aliphatic hydrocarbon substituted 2,2'-iminobisethanol as a water droplet cloudiness preventing agent.

The polyolefin films of the present invention may be non-oriented or oriented. According to one specific embodiment they are biaxially oriented.

In accordance with a further embodiment of the invention aliphatic hydrocarbon-substituted 2,2'-iminobisethanols having a solidification point of less than 35°C or a pour point of less than 45°C, preferably less than 40°C or combinations of the said compounds with polyoxyethylene sorbitan oleates and / or polyglyceryl oleates are comprised in the film.

The polyolefin films to be used with the compounds of this invention are widely defined as films comprising one or more layers, such as orientated, blown, cast, shrink, stretch, cross-linked, coextruded and thermoformed films, and the like. The manufacturing of polyolefin films is well-known. Any conventional film technologies can be used for the production of film according to the present invention. In general the polymers and additives are fed into an extruder where the polymers are molten by heating and mixed with the additives. This composition is transferred to a tubular or flat die to form a film. Using the blown film technology the tube is inflated to a desired bubble diameter with a determined film thickness whereas the technique of cast films deliver thin sheets through the usage of narrow slit dies. Afterwards the films can be biaxially orientated by any methods known by the art.

Exemplary films for the use with the compounds of this invention are polypropylene cast, polyethylene blown and biaxially oriented polypropylene films.

The definition of the polyolefin in the present description and in the claims is a polymer containing a major part, preferably 50 weight percent or more, of one or more olefinic monomers.

Such polymers may include, but are not limited to, low density polyethylene (LDPE), linear low density polyethylene (LLDPE), linear medium density polyethylene (LMDPE), very low density polyethylene (VLDPE), ultra low density polyethylene (ULDPE), high density polyethylene (HDPE), ethylene alpha-olefin co- or terpolymers, ethylene vinyl acetate copolymers. (EVA), ethylene methacrylic acid copolymers (EMAA) and their salts, polypropylene homopolymers (PP), propylene alpha-olefin co- or terpolymers, blends or mixtures of said homopolymers, copolymers and terpolymers, and so on. The polymers may be manufactured by polymerisation using various catalysis techniques or other technologies.

Other additives can be added to the formulation in order to enhance the final film characteristics and / or functionality in the common use provided that they are present in amounts which will not offset the desired effect of prevention of water droplet cloudiness.

Examples for such commonly applied additive types are antiblocking, slip and antistatic agents as well as antioxidants and neutralisers, processing aids, nucleating agents, UV light stabilisers and absorbers, colorants, fillers, tackifiers, hydrocarbon resin based modifiers, etc.

Aliphatic hydrocarbon-substituted 2,2'-iminobisethanols are well-known and widely used antistatic agents for polyolefins. Surprisingly it was found that these substances also perform as excellent preventers of water droplet-cloudiness without the addition of any other surfactants provided that these substances have a solidification point of less than 35°C. Furthermore it was observed that their preventing effect can be noticeable reduced, suspended or even totally eliminated if the film formulation contains erucamide or glycerol mono- and distearates.

Depending on the requirement of the applications, the used polymer grade and the applied film structure the dosage level of said 2,2'-iminobisothanols is preferably in the range of 0.1 to 2.0 weight percent, in particular 0.2% to 0.5% by weight are sufficient for the effect. All percentages herein are related to the total film weight.

The 2,2'-iminobisethanol compounds are especially effective at ambient temperatures below 20°C.

The 2,2'-iminobisethanols have an aliphatic hydrocarbon substituent with a chain length which normally is in the range of C8-C18. It is to be understood that the aliphatic hydrocarbon substituents may have a clearly defined chain length, but also may have a chain length distribution. Generally, chain lengths of more than C16/C18 result in a poor performance, possibly due to a limited ability to migrate to the surface and to render the desired surface effects. Such long chain hydrocarbon substituents normally result in a solidification temperature, which is higher than the above given limit of 35°C, or a pour point, which is higher than the limit of 45°C or 40°C, respectively.

The aliphatic hydrocarbon substituents may be saturated or unsaturated, unsaturated hydrocarbon substituents generally having a comparable or better performance than saturated ones.

In further trials the efficiency of various polyglycerol and polyoxyethylene sorbitan esters of fatty acids has also been researched. It was found that those esters of oleic acids can prevent the water droplet cloudiness at a wide temperature window of 5°C to 60°C with a good effect.

The respective dosages are in a range reaching from 0.2 to 4.0 weight percent, preferably from 1.0% to 2.0% by weight.

Contrary to expectations esters of stearic acids are only effective at temperatures above 20°C. Moreover their usage in combinations with other suitable agents may negatively effect the performance at temperature below 20°C.

In order to improve the polyolefin film formulation for an excellent prevention of water droplet cloudiness in a wide temperature range and to optimize the addition rate combinations of the said 2,2'-iminobisethanols with polyoxyethylene sorbitan oleates and / or polyglyceryl oleates are favourable. The combined dosages are in a range reaching from 0.2 to 3.0 weight percent, preferably from 0.5 to about 1.5% by weight.

The following assessment criteria and measurement methods were used to characterise raw materials and films of the hereinafter described examples of the present invention.

### Rating of the water droplet cloudiness

The performance of the films was determined by means of the so-called refrigeration test and the hot packaging test.

For the refrigeration test a 250 ml beaker is filled with 200 ml water and covered on the top with a sample of the test film. Thereafter the beaker is stored in a temperature controlled cabinet at 4°C, e.g. in a suitable refrigerator.

For the hot packaging test a 250 ml beaker is filled with 50 ml water and covered on the top with a sample of the test film. Thereafter the beaker is stored in a tempered bath containing water at constant 60°C.

During both test periods the formation of condensed water is monitored and rated according to the assessment criteria of Table 1 after predeterminated time intervals.

**Table 1**

| Rating | Description | Comments |
|---|---|---|
| 0 | Opaque layer of very small droplets, very poor light transmission and the packed goods are not visible | Inferior |
| 2 | Layer of small droplets with a size of 1 to 2 mm, poor light transmission and the packed goods are somewhat obscured | Very poor |
| 4 | Discontinuous film of many medium droplets with a size of 2 to 4 mm, lens effect and dripping | Poor |
| 6 | Discontinuous film of large water drops (>4 mm) | Fair |
| 8 | Randomly scattered or only a few of large isolated transparent drops | Good |
| 10 | Completely transparent film displaying no visible water | Very good |

For food packaging films a good performance should be achieved immediately after the beginning of the tests and should persist for a certain period. Whereas the refrigeration test requires 1 to 2 weeks, the hot packaging test only requires a period of 1 to 4 hours.

In addition it is necessary that the antifog performance for such films will last prolonged storage times, up to 6 months, after production.

### Melt Flow Index

The melt flow index was measured in accordance to DIN 53735 at a load of 21.6 N and 230° C for polypropylene and at 21.6 N / 190°C for polyethylene.

### Pour Point

The pour point of the 2,2'-iminobisethanols was mensured in accordance with ASTM D-97.

### Haze

The haze of the films was measured according to ASTM D-1003.

### Coefficent of Friction

Dynamic friction coefficient of the films were determined according to DIN 53375.

### Examples

The following examples are given to illustrate some particular embodiments but are not intended to limitat the present invention.

### Biaxially orientated polypropylene films (Examples 1 to 5, Table 2)

In each of these examples coextruded films with a total thickness of 25 µm were produced using olefinic polymer resins described below. The additives were dosed via concentrates (masterbatches). The asymmetrical three-layered films having the structure of A/B/C were manufactured by melting the polymers and masterbatches, extruding the melt blend through a slot die in sheet form, and subsequent stepwise orienting in the longitudinal and transverse directions. After biaxial orientation, the film is thermally set and air corona treated on both sides with a treatment level of 40 - 42 mN/m. The outer top layer A had a thickness of 1 µm and the inner top layer C had a thickness of 2 µm.

### Applied polymer grades

The core layer consisted of a common polypropylene homopolymer having a melting point of 166 °C, a melt flow index of 3 g/10 min and chain isotacticity index of 94%. The polymer was stabilised with 0.05% pentaerythriol tetrakis-(3-(3,5-di-tert-butyl-4-hydroxyphenyl)propionate), 0.1% tris(2,4-di-tert-butylphenyl)phosphite and 0.04% magnesium/aluminium-hydrotalcite.

Both top layers were manufactured with random copolymer of ethylene and propylene having a melt flow index of 5 g/10 min and a ethylene content of 5 % by weight. For the stabilisation of the copolymer 0.075% pentaerythriol tetrakis-(3-(3,5-di-tert-butyl-4-hydroxyphenyl)propionate), 0.075% tris(2,4-di-tert-butylphenyl)phosphite, 0.03 calcium stearate and 0.03% magnesium/aluminium-hydrotalcite were applied.

### The following are typical manufacturing conditions in detail

| Extrusion temperatures: | |
|---|---|
| Core layer B: | 238°C |
| Top layer A: | 249°C |
| Top layer C: | 249°C |
| Die: | 242°C |

| | |
|---|---|
| Chill roll temperature: | 35°C |
| Water quench: | 30°C |

| Machine direction (longitudinal) stretching: | |
|---|---|
| Temperature: | 118°C |
| Stretch Ratio: | 1 : 4.5 |

| Transverse stretching, temperatures: | |
|---|---|
| Heat-up zones: | 175°C |
| Stretching zones: | 151°C |
| Heat setting: | 145°C |

Transverse stretching, ratio: 1 : 6.5
Air corona discharge: about 10 kV /10kHz

### Polypropylene cast films (Examples 7 to 12, Table 3)

Monolayered cast films with a thickness of 50 µm were produced using a random copolymer of ethylene and propylene having a melt flow index of 5 g/10 min and a ethylene content of 5 % by weight. As it is conventional in the extrusion process the mixture of the polymers and the masterbatches is to begin with compressed and then liquefied in the extruder. The melt is then forced through a flat film die and the film is taken-off by two take-off rolls. During this process it cools and solidifies. The casting of the film is followed by an air corona treatment of one side with a level of 40 - 42 mN/m. The film is subsequently wound-up in a common manner by means of a wind-up unit.

The production temperatures were:

| | |
|---|---|
| Extruder | 230°C |
| Die | 230°C |
| Chill roll | 25°C |

### Blown polyethylene films (Examples 13 to 19, Table 4)

The monolayered tubular films were manufactured by melt extrusion of a mixture of polymers and additive masterbatches through an annular die in the form of a seamless tubing, drawing the tube from the die, and thereafter cooling, flattening and winding the tube on reels. A bubble of air is maintained within the tube between the annular die and the flattening means to distend the tube to the desired diameter. In each of these examples the films were down-gauged to a thickness of 50 µm. For the film manufacture a Low Density Polyethylene (LDPE) having a melt flow index of 2 g/10 min and a density of 0.922 g/cm³ are used.

The following machine and production parameters were applied:

| | |
|---|---|
| Diameter (D) and length of the screw | 35 mm/ 28 D |
| Die diameter (DD) | 100 mm |
| Blow-Up Ratio (BUR): | 2.5 : 1 |

| | |
|---|---|
| Extruder temperatures: | 140 to 180°C |
| Die temperature | 180°C |

## Claims

1. A polyolefin film for preventing water droplet cloudiness comprising a core layer and two cover layers, the layers comprising a polyolefin as a main component, **characterized in that** at least one layer comprises a C8-C18 alkyl substituted 2,2'-iminobisethanol as a water droplet cloudiness preventing agent, said C8-C18, alkyl substituted 2,2'-iminobisethanol having a solidification temperature of less than 35°C.

2. The film of claim 1, additionally comprising an polyoxyethylene sorbitan oleate and/or a polyglyceryl oleate as said agents.

3. The film of claim 1 or 2, wherein the main component is a polyethylene or a polypropylene.

4. The film of any of claims 1 to 3, wherein the amount of said 2,2'-iminobisethanol is in the range of 0.1 % to 2.0 % of the total film weight.

5. The film of any of claims 1 to 3, in which the amount of said 2,2'-iminobisethanol-polyoxyethylene sorbitan oleate and/or polyglyceryl oleate combined is in the range of 0.1% to 3.0 % of the total weight of the film.

6. The film of any of the preceding claims, wherein at least one of the cover layers consists of polyethylene, polypropylene copolymer, polypropylene terpolymer or a metallocene resin.

7. The film of any of the preceding claims, wherein at least one cover layer contains a non-migrating slip agent.

8. The film according to any of the preceding claims, wherein the surface tension of at least one of the cover layers is larger than 38 mN/m.

9. The film of claim 8, wherein the surface tension of both cover layers is larger than 38 mN/m and the surface tension of one cover layer is at least 4 mN/m higher than the other one.

10. The film according to any of the preceding claims, wherein the water droplet cloudiness preventing agent is added to the core layer or to the core layer and one of the cover layers.

11. The film according to any of the preceding claims, further including on or more intermediate layers comprising said agents at least in the core layer and in that intermediate layer that is adjacent to the cover layer on the fog-resistent film side, where water droplet cloudiness is to be prevented.

12. The film according to any of the preceding claims, wherein the film is biaxially oriented.

13. The film of any of the preceding claims, wherein the C8-C18 alkyl- substituted of 2,2'-iminobisethanol has a pour point of less than 45°C, preferably less than 40°C.

14. The use of C8-C18 alkyl substituted 2,2'-iminobisethanol alone or in combination with polyoxyethylene sorbitan oleate and/or polyglyceryl oleate as water droplet cloudiness preventing agents in mono- or multilayer films containing polyolefin homopolymers, polyolefin copolymers or polyolefin terpolymers as a main constituent, said C8-C18 alkyl substituted 2,2'-iminobisethanol having a solidification temperature of less than 35°C.

15. The use of claim 14, wherein the pour point of said 2,2'-iminobisethanol is less than 45°C, preferably less than 40°C.

16. A process for the production of a fog-resistant biaxially orientated polyolefin film according to any of claims 1 to 13, comprising the step of adding a C8-C18 alkyl substituted 2,2'-iminobisethanol alone or in combination with polyoxyethylene sorbitan oleate and/or polyglyceryl oleate as anti-fogging agents in form of a masterbatch, a concentrate or by liquid dosage equipment to the film forming polyolefin and successive film formation and processing, said C8-C18 alkyl substituted 2,2'-iminobisethanol having a solidification temperature of less than 35°C.

17. The process of claim 16 comprising film formation by a flat die or a tubular die.

18. The process of claim 16 or 17 comprising biaxial orientation of the formed film in sequential or simultaneous stretching equipment.

19. Use of the film of any of claims 1 to 13 for packaging food.

20. Use of the film of any of claims 1 to 13 for the manufacture of thermoforming articles.

21. Use of the film of any of claims 1 to 13 in a composite film or a barrier film against water vapour, various gases or UV light.
**Table 2a: Three-layer coextruded BOPP Film**
| Example No. | Formulation of the outer cover layer A | Formulation of the inner cover layer C | Formulation of the core layer B | Rating of the water droplet-cloudiness at 4°C (storage time 1 week) | | | Rating of the water droplet-cloudiness at 4°C (storage time 1 month) | | |
|---|---|---|---|---|---|---|---|---|---|
| | | | | 1 hour | 1 day | 10 days | 1 hour | 1 day | 10 days |
| 1 | 1500 ppm AB 1 | 1500 ppm AB 1, 3000 ppm IBE 4 | 2500 ppm IBE 4 | 4 | 6 | 6 | 9 | 10 | 10 |
| 2 | 2500 ppm AB 2 | 2500 ppm AB 2, 4000 ppm IBE 4 | 4000 ppm IBE 4 | 10 | 9 | 10 | 10 | 10 | 10 |
| 3 | 1500 ppm AB 1 | 1500 ppm AB 1, 1000 ppm IBE 4, 14000 ppm pGO | 1000 ppm IBE 4 | 10 | 8 | 5 | 10 | 9 | 10 |
| | | | 14000 ppm PGO | | | | | | |
| 4 | 1500 ppm AB1 | 1500 ppm AB 1, 18000 ppm PGO | 18000 ppm PGO | 8 | 8 | 10 | 8 | 10 | 10 |
| 5 | 1500 ppm AB 1 | 1500 ppm AB 1, 14000 ppm PGO | 1800 ppm GMS | 2 | 2 | 4 | 2 | 4 | 6 |
| | | | 7200 ppm PGO | | | | | | |
| | | | | | | | | | |
|---|---|---|---|---|---|---|---|---|---|
| AB 1: Synthetic silica (SiO2) as antiblocking agent having an average particle size of 4 µm and pore volume of 1.0 cm³/g. AB 2: 1;1,1-Trimethylolpropane trimethacrylate IBE 4: N-alkyl(C₁₄-C₁₈)-2,2'-iminobisethanol, solidification point 0°C PGO: Polyglyceryl-3 oleate GMS: Glycerol monostearate (monoester content 90%, min.) POE-STO : Polyoxyethylene (20) sorbitan trioleate SMS : Sorbitan monostearate PGO : Polyglyceryl-3 oleate GMS : Glycerol monostearate (monoester content 90%, min.) IBE 1: N-alkyl(C₈-C₁₈)-2,2'-iminobisethanol (coco type), solidification point -7°C IBE 2: N-alkyl(C₁₃-C₁₅)-2,2-iminobisethanol, solidification point +2°C IBE 3: N-alkyl(C₁₄-C₁₈)-2,2'-iminobisethanol (tallow type), solidification point +15°C IBE 4: N-alkyl(C₁₄-C₁₈)-2,2'-iminobisethanol (refined oleyl type), solidification point 0°C IBE 5: N-alkyl(C₁₄-C₁₈)-2,2'-iminobisethanol (saturated tallow type), solidification point +39°C IBE 6: N-alkyl(C₁₆-C₁₈)-2,2'-iminobisethanol (saturated stearyl type), solidification point +46°C | | | | | | | | | |
**Table 2b: Three-layer coextruded BOPP Film**
| Example No. | Formulation of the outer cover layer A | Formulation of the inner cover layer C | Formulation of the core layer B | Rating of the water droplet-cloudiness at 60°C (storage time 1 week) | | | Rating of the water droplet-cloudiness at 60°C (storage time 1 month) | | |
|---|---|---|---|---|---|---|---|---|---|
| | | | | 0.5 hour | 1 hour | 2 hours | 0.5 hour | 1 hour | 2 hours |
| 1 | 1500 ppm AB | 1500 ppm AB 1, 3000 ppm IBE 4 | 2500 ppm IBE 4 | 6 | 4 | 2 | 8 | 6 | 5 |
| 2 | 2500 ppm AB 2 | 2500 ppm AB 2, 4000 ppm IBE 4 | 4000 ppm IBE 4 | 8 | 6 | 4 | 8 | 7 | 6 |
| 3 | 1500 ppm AB 1 | 1500 ppm AB 1, 1000 ppm IBE 4, 14000 ppm PGO | 1000 ppm IBE 4 | 8 | 8 | 10 | 8 | 10 | 9 |
| | | | 14000 ppm PGO | | | | | | |
| 4 | 1500 ppm AB 1 | 1500 ppm AB 1, 18000 ppm PGO | 18000 ppm PGO | 8 | 8 | 10 | 9 | 10 | 10 |
| 5 | 1500 ppm AB 1 | 1500 ppm AB 1, 14000 ppm PGO | 1800 ppm GMS | 6 | 6 | 7 | 5 | 6 | 8 |
| | | | 7200 ppm PGO | | | | | | |
**Table 2c: Three-layer coextruded BOPP Film**
| Example No. | Formulation of the outer top layer A | Formulation of the inner top layer C | Formulation of the core layer B | Haze | | | Kinetic COF (Film side A / Film side C) | | |
|---|---|---|---|---|---|---|---|---|---|
| | | | | 1 week | 1 month | 3 month | 1 week | 1 month | 3 month |
| 1 | 1500 ppm AB 1 | 1500 ppm AB 1, 3000 ppm IBE 4 | 2500 ppm IBE 4 | 1.98 | 1.96 | 2.02 | 0.55 | 0.57 | 0.57 |
| 2 | 2500 ppm AB 2 | 2500 ppm AB 2, 4000 ppm IBE 4 | 4000 ppm IBE 4 | 1.91 | 1.95 | 2,10 | 0.34 | 0.35 | 0.33 |
| 3 | 1500 ppm AB 1 | 1500 ppm AB 1, 1000 ppm IBE 4, 14000 ppm PGO | 1000 ppm IBE 4 | 1.97 | 2.05 | 2,15 | 0.52 | 0.52 | 0.49 |
| | | | 14000 ppm PGO | | | | | | |
| 4 | 1500 ppm AB 1 | 1500 ppm AB 1, 14000 ppm PGO | 18000 ppm PGO | 2.67 | 2.70 | 2,76 | 0.55 | 0.57 | 0.57 |
| 5 | 1500 ppm AB 1 | 1500 ppm AB 1, 14000 ppm PGO | 1800 ppm GMS | 2.07 | 2.25 | 2.48 | 0.45 | 0.48 | 0.43 |
| | | | 7200 ppm PGO | | | | | | |
**Table 3: Monolayer CPP Films (Examples 6 to 11)**
| Example No. | Formulation | Rating of the water droplet-cloudiness at 4°C (storage time 2 week) | | | Rating of the water droplet-cloudiness at 60°C (storage time 2 week) | | |
|---|---|---|---|---|---|---|---|
| | | 1 hour | 1 day | 10 days | 0.5 hour | 1 hour | 2 hours |
| 6 | 1.5% POE-STO | 7 | 8 | 8 | 9 | 8 | 8 |
| 7 | 1,2% POE-SO + 0,3% IBE 4 | 9 | 9 | 10 | 8 | 8 | 8 |
| 8 | 0,9% POE-STO + 0.3% IBE 4 + 0,3% SMS | 5 | 6 | 6 | 9 | 8 | 8 |
| 9 | 0,9% POE-STO + 0,3% IBE 4 + 0,3% PGO | 9 | 10 | 10 | 10 | 10 | 9 |
| 10 | 0,9% POE-STO + 0,3% IBE 4 + 0,3%.SMS + 0,3% PGO | 7 | 6 | 6 | 9 | 10 | 10 |
| 11 | 1,2% SMS + 0,3% IBE 4 | 4 | 6 | 6 | 9 | 9 | 9 |
**Table 4: PE Blown Films (Examples 12 to 18)**
| Example No. | Additivation | Rating of the water droplet-cloudiness at 4°C (storage time 1 week) | | | Rating of the water droplet-cloudiness at 4°C (storage time 3 month) | | |
|---|---|---|---|---|---|---|---|
| | | 1 hour | 1 day | 10 days | 1 hour | 1 day | 10 days |
| 12 | 2500 ppm IBE 1 | 9 | 10 | 10 | 10 | 9 | 10 |
| 13 | 2500 ppm IBE 2 | 10 | 9 | 10 | 10 | 9 | 9 |
| 14 | 2500 ppm IBE 3 | 10 | 9 | 10 | 10 | 9 | 10 |
| 15 | 2500 ppm IBE 5 | 4 | 5 | 6 | 1 | 2 | 3 |
| 16 | 2500 ppm IBE 4 | 10 | 10 | 10 | 10 | 10 | 9 |
| 17 | 2500 ppm IBE 6 | 1 | 2 | 3 | 1 | 2 | 2 |
| 18 | 2225 ppm IBE 1 | 2 | 3 | 5 | 2 | 4 | 5 |
| | 3750 ppm GMS | | | | | | |

## Patentansprüche

1. Polyolefinfolie zum Verhindern von Wassertropfenbeschlagsbildung mit einer Kernschicht und zwei Deckschichten, wobei die Schichten Polyolefin als eine Hauptkomponente aufweisen, **dadurch gekennzeichnet, dass** wenigstens eine Schicht ein C8-18-alkyl-substituiertes 2,2'-Iminobisethanol, als Schutzmittel gegen Wassertropfenbeschlagsbildung aufweist, wobei das C8-18-alkyl-substituierte 2,2'-Iminobisethanol, eine Erstarrungstemperatur von weniger als 35 °C hat.

2. Folie nach Anspruch 1, **dadurch gekennzeichnet, dass** die Polyolefinfolie ein Polyoxyethylen-Sorbitan-Oleat und/oder ein Polyglyceryl-Oleat als solches Mittel aufweist.

3. Folie nach Anspruch 1 oder 2, **dadurch gekennzeichnet, dass** die Hauptkomponente ein Polyethylen oder Polypropylen ist.

4. Folie nach einem der Ansprüche 1 bis 3, **dadurch gekennzeichnet, dass** der Anteil des 2,2'-Iminobisethanol im Bereich von 0,1 % bis 2,0 % des Gesamtgewichts der Folie liegt.

5. Folie nach einem der Ansprüche 1 bis 3, **dadurch gekennzeichnet, dass** der Anteil des 2,2'-Iminobisethanol-Polyethylen-Sorbitan-Oleats und/oder Polyglyceryl-Oleats zusammen im Bereich von 0,1 % bis 3,0 % des Gesamtgewichts der Folie liegt.

6. Folie nach einem der vorstehenden Ansprüche, **dadurch gekennzeichnet, dass** wenigstens eine Deckschicht Polyethylen, Polypropylencopolymer, Polypropylenterpolymer oder Metallocenharz besteht.

7. Folie nach einem der vorstehenden Ansprüche, **dadurch gekennzeichnet, dass** wenigstens eine Deckschicht ein nicht-migrierendes Gleitmittel aufweist.

8. Folie nach einem der vorstehenden Ansprüche, **dadurch gekennzeichnet, dass** die Oberflächenspannung von wenigstens einer Deckschicht größer als 38 mN / m ist.

9. Folie nach einem der vorstehenden Ansprüche, **dadurch gekennzeichnet, dass** die Oberflächenspannung beider Deckschichten größer als 38 mN / m ist, wobei die Oberflächenspannung einer Deckschicht um wenigstens 4 mN / m größer ist, als die der anderen Deckschicht.

10. Folie nach einem der vorgenannten Ansprüche, **dadurch gekennzeichnet, dass** die Kernschicht oder die Kernschicht und eine Deckschicht das Schutzmittel gegen Wassertropfenbeschlagsbildung aufweisen.

11. Folie nach einem der vorgenannten Ansprüche mit einer oder mehreren Zwischenschichten, die diese Mittel wenigstens in der Kernschicht enthalten und in der Zwischenschicht, die an die Deckschicht auf der beschlagsresistenten Folienseite angrenzt, wo die Wassertropfenbeschlagsbildung zu vermeiden ist.

12. Folie nach einem der vorstehenden Ansprüche, **dadurch gekennzeichnet, dass** die Folie biaxial orientiert ist.

13. Folie nach einem der vorstehenden Ansprüche, **dadurch gekennzeichnet, dass** das C8-18-alkyl-substituierte 2,2'-Iminobisethanol einen Pourpoint von weniger als 45 °C, vorzugsweise weniger als 40 °C, hat.

14. Verwendung von C8-18-alkyl-substituierten 2,2'-Iminobisethanols, allein oder in Kombination mit Polyoxyethylen-Sorbitan-Oleat und/oder Polyglyceryl-Oleat als Mittel gegen Wassertropfenbeschlagsbildung in ein- und mehrschichtigen Folien, die Polyolefin-Homopolymere, Polyolefin-Copolymere oder Polyolefin-Terpolymere als Hauptkomponente aufweisen, wobei das C8-18-alkyl-substituierte 2,2'-Iminobisethanol eine Erstarrungstemperatur von weniger als 35 °C hat.

15. Verwendung nach Anspruch 14, **dadurch gekennzeichnet, dass** das C8-18-alkyl-substituierte 2,2'-Iminobisethanol, einen Pourpoint von weniger als 45 °C, vorzugsweise weniger als 40 °C, hat.

16. Verfahren zur Herstellung einer beschlagsresistenten biaxial orientierten Polyolefinfolie nach einem der Ansprüche 1 bis 13 mit dem Schritt der Zugabe von C8-18-alkyl-substituiertem 2,2'-Iminobisethanol allein oder in Kombination mit Polyoxyethylen-Sorbitan-Oleat und/oder Polyglyceryl-Oleat als Beschlagschutzmittel in Form eines Masterbatches, eines Konzentrats oder flüssig über eine Dosiervorrichtung zu dem filmbildenden Polyolefin, sowie anschließende Filmbildung und -verarbeitung, wobei das C8-18-alkylsubstituierte 2,2'-Iminobisethanol eine Erstarrungstemperatur von weniger als 35 °C hat.

17. Verfahren nach Anspruch 16, wobei die Filmbildung mittels einer schlitz- oder einer rohrförmigen Düse erfolgt.

18. Verfahren nach Anspruch 16 oder 17 mit einer biaxialen Orientierung der gebildeten Folie in einer sequentiellen oder simultanen Reckvorrichtung.

19. Verwendung der Folie nach einem der Ansprüche 1 bis 13, für Lebensmittelverpackungen.

20. Verwendung der Folie nach einem der Ansprüche 1 bis 13, bei der Herstellung von thermoformbaren Artikeln.

21. Verwendung der Folie nach einem der Ansprüche 1 bis 13, in einer Verbundfolie oder einer Abschirmfolie gegen Wasserdampf, diverse Gase oder UV-Strahlung.

## Revendications

1. Feuille en polyoléfine ayant une résistance à l'embuage, comprenant une couche centrale et deux couches de couverture, les couches comprenant une polyoléfine à titre de composant principal, **caractérisée en ce qu'**au moins une couche comprend un 2,2'-iminobiséthanol substitué par un alkyle en C8-C18 à titre d'agent de prévention de l'embuage, ledit 2,2'-iminobiséthanol substitué par un alkyle en C8-C18 ayant une température de solidification inférieure à 35°C.

2. Feuille selon la revendication 1, comprenant en outre un oléate de sorbitan polyoxyéthyléné et/ou un oléate de polyglycéryle au titre desdits agents.

3. Feuille selon la revendication 1 ou 2, dans laquelle le composant principal est un polyéthylène ou un polypropylène.

4. Feuille selon l'une quelconque des revendications 1 à 3, dans laquelle la quantité dudit 2,2'-iminobiséthanol est dans l'intervalle de 0,1% à 2,0% du poids total de la feuille.

5. Feuille selon l'une quelconque des revendications 1 à 3, dans laquelle la quantité dudit 2,2'-iminobiséthanol-oléate de sorbitan polyoxyéthyléné et/ou oléate de polyglycéryle combinés est dans l'intervalle de 0,1 % à 3,0% du poids total de la feuille.

6. Feuille selon l'une quelconque des revendications précédentes, dans laquelle au moins l'une des couches de couverture consiste en polyéthylène, copolymère de polypropylène, terpolymère de polypropylène ou une résine de métallocène.

7. Feuille selon l'une quelconque des revendications précédentes, dans laquelle au moins une couche de couverture contient un agent de glissement non-migrant.

8. Feuille selon l'une quelconque des revendications précédentes, dans laquelle la tension superficielle d'au moins l'une des couches de couverture est supérieure à 38 mN/m.

9. Feuille selon la revendication 8, dans laquelle la tension superficielle des deux couches de couverture est supérieure à 38 mN/m et la tension superficielle d'une couche de couverture est d'au moins 4 mN/m supérieure à celle de l'autre.

10. Feuille selon l'une quelconque des revendications précédentes, dans laquelle l'agent destiné à éviter l'embuage est ajouté à la couche interne, ou la couche interne et à l'une des couches de couverture.

11. Feuille selon l'une quelconque des revendications précédentes, comportant en outre une ou plusieurs couches intermédiaires comprenant lesdits agents au moins dans la couche centrale et dans la couche intermédiaire qui est adjacente à la couche centrale sur la face de la feuille résistante au brouillard, sur laquelle l'objectif est d'éviter l'embuage.

12. Feuille selon l'une quelconque des revendications précédentes, dans laquelle la feuille est orientée biaxialement.

13. Feuille selon l'une quelconque des revendications précédentes, dans laquelle le 2,2'-iminobiséthanol substitué par un alkyle de C8-C18 a un point d'écoulement inférieur à 45°C, de préférence inférieur à 40°C.

14. Utilisation de 2,2'-iminobiséthanol substitué par un alkyle en C8-C18 seul ou en combinaison avec de l'oléate de sorbitan polyoxyéthyléné et/ou de l'oléate de polyglycéryle à titre d'agents empêchant l'embuage dans des feuilles mono- ou multicouche contenant des homopolymères de polyoléfine, des copolymères de polyoléfine ou des terpolymères de polyoléfine à titre de constituant principal, ledit 2,2'-iminobiséthanol substitué par un alkyle en C8-C18 ayant une température de solidification inférieure à 35°C.

15. Utilisation selon la revendication 14, dans laquelle le point d'écoulement dudit 2,2'-iminobiséthanol est inférieur à 45°C, de préférence inférieur à 40°C.

16. Procédé pour la production d'une feuille de polyoléfine orientée biaxialement et résistante au brouillard selon l'une quelconque des revendications 1 à 13, comprenant l'étape d'addition d'un 2,2'-iminobiséthanol substitué par un alkyle en C8-C18 seul ou en combinaison avec de l'oléate de sorbitan polyoxyéthyléné et/ou de l'oléate de polyglycéryle à titre d'agents antibrouillard sous forme d'un mélange mère, d'un concentré ou par un équipement de dosage de liquides, à la polyoléfine filmogène et formation subséquente et traitement des feuilles, ledit 2,2'-iminobiséthanol substitué par un alkyle en C8-C18 ayant une température de solidification inférieure à 35°C.

17. Procédé selon la revendication 16, comprenant la formation de feuille par une filière plate ou une filière tubulaire.

18. Procédé selon la revendication 16 ou 17, comprenant une orientation biaxiale de la feuille formée dans un équipement d'étirage séquentiel ou simultané.

19. Utilisation de la feuille selon l'une quelconque des revendications 1 à 13 pour l'emballage d'aliments.

20. Utilisation de la feuille selon l'une quelconque des revendications 1 à 13 pour la fabrication d'articles thermoformés.

21. Utilisation de la feuille selon l'une quelconque des revendications 1 à 13 dans une feuille composite ou une feuille barrière contre la vapeur d'eau, différents gaz ou la lumière UV.
